# EUROPEAN PATENT SPECIFICATION

(11) **EP 0 629 360 B1**
(45) Date of publication and mention of the grant of the patent: **12.08.1998**
(21) Application number: 94303998.2
(22) Date of filing: 03.06.1994
(51) Int. Cl.: A43B 13/20, B29D 22/00

(54) **Cushioning system for a shoe**
Dämpfungsvorrichtung für Schuhe
Dispositif d'amortissement pour chaussures

(30) Priority: 04.06.1993 US 70921
(43) Date of publication of application: 21.12.1994
(73) Proprietor: NIKE INTERNATIONAL LTD, Beaverton, Oregon 97005-6453 (US)
(72) Inventor: Potter, Daniel R., Forest Grove, Oregon 97116 (US)
(74) Representative: Dean, John Paul

(56) References cited:
- EP-A- 0 543 510
- WO-A-82/00571
- GB-A- 2 050 145
- GB-A- 2 118 428
- US-A- 4 129 951
- US-A- 4 670 995

## Description

### BACKGROUND OF THE INVENTION

### Field of the Invention

This application is directed to a cushioning system for a shoe, and in particular, a fluid-filled bladder cushioning system containing separate reservoir chambers.

### Description of the Related Art

Bladders have long been used in shoes as a cushion to increase shoe comfort, enhance foot support, reduce the risk of injury and other deleterious effects, and decrease fatigue. In general, the bladders are comprised of elastomeric materials which are shad to define at least one pressurized pocket or chamber. Typically, a bladder will actually define many chambers arranged in a pattern designed to achieve one or more of the above-stated objectives. The chambers may be pressurized with a number of different mediums, such as air, various gases, water, or other liquids.

Many different chamber configurations have been developed in an effort to achieve the desired result. For instance, bladders have been constructed with a single chamber that extends over the entire area of the sole. One example of this type of bladder is disclosed in U.S. Patent No. 2,080,469 to Gilbert, entitled "Pneumatic Foot Support. " Alternatively, bladders have included a number of chambers fluidly interconnected with one another. Examples of these types of bladders are disclosed in U.S. Patent No. 4,183,156 to Rudy, entitled "Insole Construction For Articles of Footwear," hereby, incorporated by reference, and U.S. Patent No. 900,867 to Miller, entitled "Cushion for Footwear." However, these type of bladder constructions have been known to flatten and "bottom out" when they receive high impact pressures, such as experienced in athletic activities. Such failures negate the intended benefits of providing the bladder.

In an effort to overcome this problem, bladders have been developed wherein the chambers are fluidly connected by restricted openings. Examples of these bladders are illustrated in U.S. Patent No. 4,217,705 to Donzis, entitled "Self-contained Fluid Pressure Foot Support Device," U.S. Patent No. 4,129,951 to Petrosky, entitled "Air Cushion Shoe Base," and U.S. Patent No. 1,304,915 to Spinney, entitled "Pneumatic Insole." These bladders, however, have tended to either be ineffective in overcoming the deficiencies of the non-restricted bladders or have been too expensive to manufacture.

Additionally, artisans have developed shoe bladders which include a number of separate chambers that are independent of one another. In other words, the chambers are not fluidly connected. Hence, the fluid contained in any one chamber is precluded from passing into another chamber. One example of this construction is disclosed in U.S. Patent No. 2,677,906 to Reed, entitled "Cushioned Inner Sole For Shoes and Method of Making the Same. " Although this design obviates "bottoming out" of the bladder, it also requires each chamber to be individually pressurized. Thus, the cost of production has been exceedingly high. U.S. Patent No. 4,722,131 to Huang discloses an open system type of air cushion. The air cushion has two cavities, with each cavity having a separate air valve. Thus, each cavity can be inflated to a different pressure by pumping in or releasing air as desired. However, in systems such as disclosed in Huang, a separate pump is required to increase the pressure in the cavities. Such a pump would have to be carried by the user if it is desired to inflate the cavities away from home, inconveniencing the user. Alternatively, the pump could be built into the shoe, adding weight to the shoe and increasing the cost and complexity. Additionally, open systems tend to lose pressure rapidly due to diffusion through the bladder membrane or leakage through the valve. Thus, the pressure must be adjusted often. Furthermore, a pressure gauge is necessary to determine if the desired internal pressure has been achieved. Pressure gauges are expensive, and have limited accuracy at the low pressures and volumes which would be utilized in the cavities, due to the fact that a significant volume of air is required to register a given pressure. Thus, such a large volume of air would escape during the taking of a pressure reading that the reading would be inherently inaccurate.

Another shoe bladder manufactured by Etonic also includes a plurality of discrete chambers which lack fluid interconnection. The chambers are, however, all formed at ambient pressure. This construction obviates the need to individually pressurize each chamber and thus results in less manufacturing costs.

However, the use of chambers pressurized above ambient pressure is not possible. As a result, the versatility and potential gain from using the bladder is reduced.

A further shoe bladder is described in WO-A-82 00571 to Marker. However the bladder described involves the use of a plurality of pressure gas chambers arranged to receive air from a pump chamber connected to the outside air and to each of the pressure gas chambers by non-return valves. WO-A-82 00571 does not describe a system of chambers closed to the external environment.

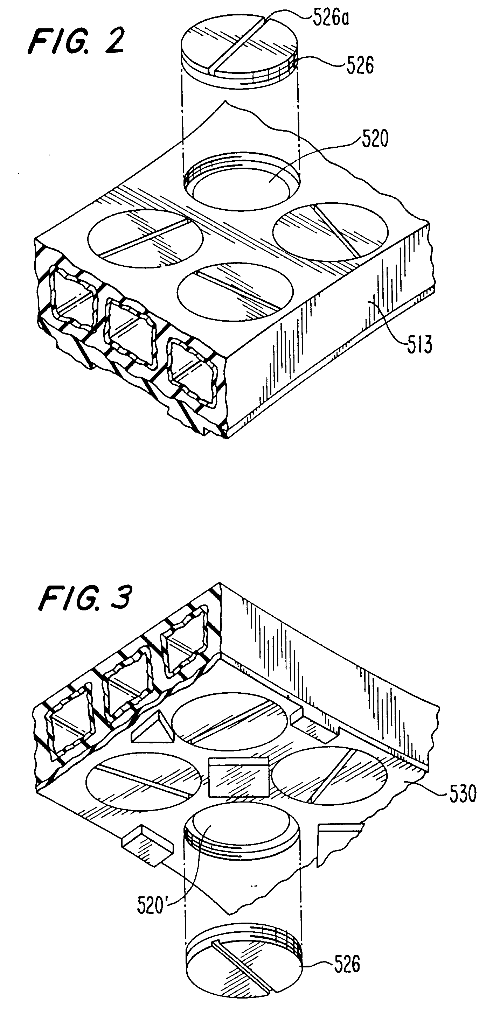

Attempts have further been made to design the bladders to suit specific needs. For example, the support and cushion needed for jogging would be different than that needed for aerobics. In ladders having either restricted connections between chambers or independent chambers, artisans have sought to differentiate the pressures in the various chambers depending on the part of the plantar surface to be supported and the activity to be engaged. Examples of this practice include US Patent No. 4,445,283 to Meyers, entitled "Footwear Sole Member," the '705 patent to Donzis, the '906 patent to Reed, the '951 patent to Petrosky, and the '915 patent to Spinney. These approaches, however, have not been entirely successful. With respect to the restricted flow bladders, the results have had only limited success in actually providing the desired differences in pressure. Although the independent bladders effectively provide different pressures at various points across the sole, the cost to manufacture the bladders has been prohibitively high. As illustrated in Figs 3 and 7 in the '906 patent to Reed, each independent chamber must be individually pressurised. As can be readily appreciated, this process is not suitable for mass production, particularly in bladders having a significant number of chambers.

### SUMMARY OF THE INVENTION

According to one aspect of the invention there is provided a cushioning element for use in a shoe, said cushioning element comprising:
a fluid-filled support chamber and a variable volume fluid reservoir chamber, said reservoir chamber being collapsible to reduce the volume thereof, and being linked in fluid communication with said support chamber, characterised in that both said fluid-filled support chamber and said reservoir chamber are closed to the external environment; and in that collapsing means is provided for collapsing said reservoir chamber are closed to the external environment; and in that collapsing means is provided for collapsing said reservoir chamber a desired amount so as to cause said reservoir chamber to have a desired volume and for maintaining the desired volume.

The reservoir chamber may be controllably linked to the support chamber so as to be selectively in full communication with or isolated from the support chamber.

The cushioning element may include a connecting element linking the support chamber and the reservoir chamber in fluid communication, a control element being disposed to control the opening and closing of the connecting element to allow the chambers to be controllably linked The connecting element is preferably a resiliently collapsible tube, and the control element includes a screw disposed adjacent the collapsible tube, the position of the screw relative the tube being adjustable such that the screw may be moved into contact with the tube to adjustably collapse the tube and thereby control the fluid communication of the reservoir chamber and the support chamber.

The cushioning element may include a screw-threaded chamber in which the reservoir chamber is disposed, and a screw element disposed and vertically moveable within the screw-threaded chamber. The screw element allows the reservoir chamber to be collapsed a desired amount so as to cause the reservoir chamber to have a desired volume and allows for maintaining of the desired volume.

According to another aspect of the invention there is provided a method of increasing the resistance of first and second fluid filled chamber in a shoe bladder closed to the environment characterised by the steps of increasing the mass of fluid contained in the first chamber by reducing the volume of the second chamber and thereby forcing fluid into the first chamber from the second chamber and simultaneously reducing the effective volume of the first chamber and maintaining the reduced effective volume and increased mass at a desired level by maintaining the reduced volume of the second chamber.

Fig 1 is a top plan view of an embodiment of the invention showing an adjustable cushioning system including compressible reservoirs.

Fig 1A is a cross-sectional view taken along line A-A in Fig 1.

Fig 1B is a cross-sectional view taken along line B-B in Fig 1.

Fig 1C is a cross-sectional view taken along line C-C in Fig 1.

Fig 2 is an overhead perspective view showing a portion of the midsole.

Fig 3 is an underside perspective view showing a portion of the cushioning system.

Fig 4 is a top plan view of a second embodiment of the invention showing a modified adjustable cushioning system including a compressible reservoir.

Fig 4a is a cross-sectional view taken along line A-A in Fig 4.

Fig 4b is a cross-sectional view taken along line B-B in Fig 4.

### DETAILED DESCRIPTION OF THE PREFERRED EMBODIMENT

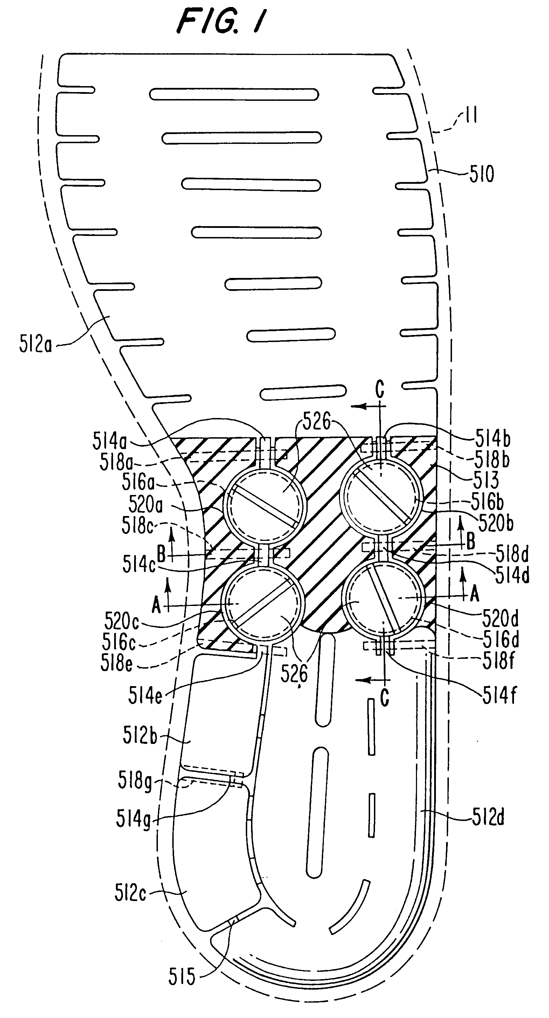

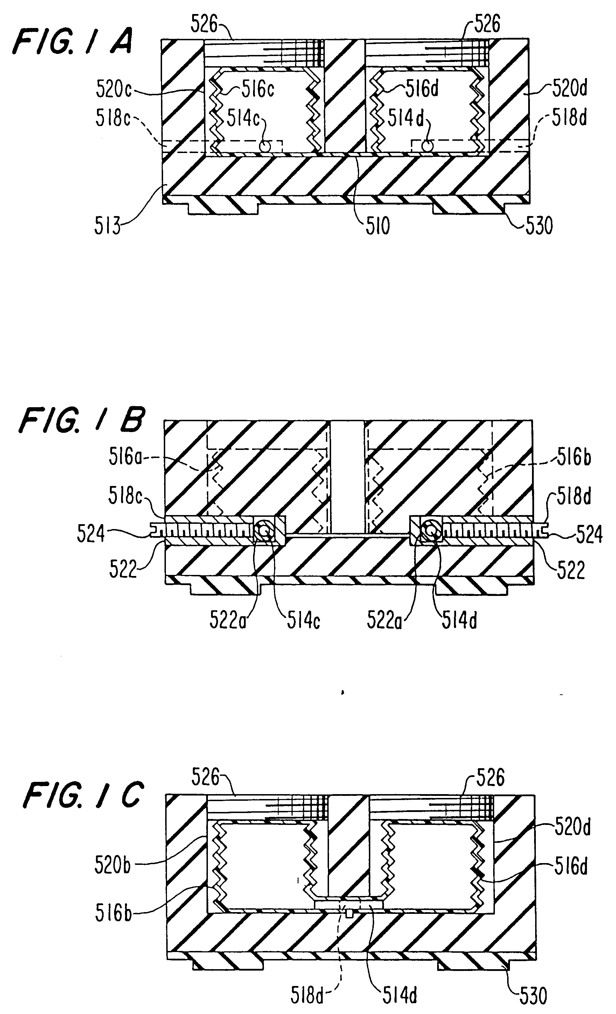

In a preferred embodiment of the invention (Figures 1A - 1C) a bladder 510 is a thin, elastomeric member defining a plurality of chambers or pockets 512. The chambers are pressurised to provide a resilient support. Bladder 510 is particularly adapted for use in the midsole of the shoe, but could be included in other parts of the sole or have applicability in other fields of endeavour. In a midsole, blade 510 would preferably be encapsulated in an elastomeric foam. As is well know in the art, the foam need not fully encapsulate the bladder. Moreover, the bladder can be used to form the entire midsole or sole member.

Preferably, bladder 510 is composed of a resilient, plastic material such as a cast or extruded ester base polyurethane film having a shore "A" hardness of 80 to 95 (eg Tetra Plastics TPW-250) which is inflated with hexafluorethane (eg Dupont F-116) or sulfur hexafluoride. However, other materials and fluids having the requisite characteristics, such as those disclosed in US Patent No. 4,183,156 to Rudy, could also be used. Further, the bladders can also be fabricated by blow moulding or vacuum forming techniques.

In Figure 1, cushioning element or bladder 510 includes four separate gas-filled post support storage chambers 512a-d. Chambers 512 compress and stiffen when a load is applied in order to provide cushioning but do not collapse upon themselves. Forward medial support chamber 512b and rearward medial support chamber 512c are disposed on the medial side in the heel region, and extend approximately 1/3 of the width of the bladder. Lateral chamber 512d also is disposed in the heel region, and extends from the medial side for approximately 2/3 of the width of the bladder. Chambers 512b-d are spaced from each other.

Chambers 512b and 512c are linked by interconnecting tube or port 514g which may be selectively opened or closed by pinch-off valve 518g, the operation of which is discussed in greater detail below. Chambers 512c and 512d also may be linked by port 515 to facilitate initial pressurization of the chambers. However, as shown in Figure 1 and discussed above, if desired, port 515 may be permanently sealed to prevent fluid flow between chamber 512c and chamber 512d. Chamber 512a forms the forward portion of cushioning element 510, and extends generally across the width of the sole. Chamber 512a is formed as a separate element from chambers 512b-d, with foam element 513 disposed therebetween, and is not linked directly in fluid communication with any of chambers 512b-d. Thus, cushioning element 510 would include separate bladder elements, although as described below, the cushioning element could comprise a single integrally formed bladder element.

Foam element 513 forms the arch portion of the cushioning element and includes cylindrical openings 520a-d formed partially or fully therethrough. Variable volume reservoir chambers 516a-d are disposed within openings 520a-d, respectively. Chambers 516a-d have a bellows shape which allows the chambers to collapse upon themselves to reduce the volume. Front medial reservoir chamber 516a is linked in fluid communication with front support chamber 512a by interconnecting tube or port 514a, and with rear medial compressible reservoir 516c by interconnecting tube 514c. Rear medial reservoir chamber 516c is linked in fluid communication with forward medial post chamber 512b by interconnecting tube 514c. Front lateral reservoir chamber 516b is linked in fluid communication with front support chamber 512a by interconnecting tube 514b, and with rear lateral reservoir chamber 516d by interconnecting tube 514d. Rear lateral reservoir chamber 516d is further linked in fluid communication with lateral support chamber 512d by interconnecting tube 514f. The opening and closing of each of interconnecting tubes 514a-f is controlled by a corresponding valve 518a-f, described further below.

Cushioning is provided by the confined gas in chambers 512a-d, and any load on any part of a given chamber will instantaneously increase the pressure equally throughout the whole chamber. The chamber will compress to provide cushioning, stiffening but not collapsing, due to the increase in pressure of the contained gas. When open, interconnecting tubes 514 do not restrict the flow between support chambers 512 and reservoirs 516, and two support chambers and/or reservoirs connected by an open tube function dynamically as a single chamber. Thus, when all of tubes 514 are open, cushioning element 510 functions as a substantially unitary bladder providing cushioning throughout the midsole.

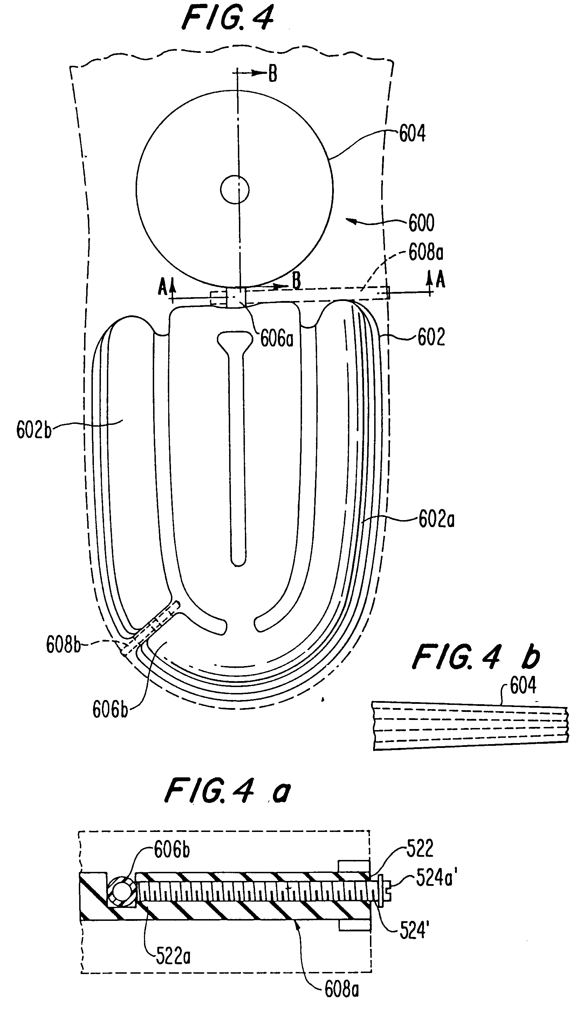

Valves 518 may comprise any suitable valve known in the art, for example, a pinch-off valve including a screw as shown in Figures 1A, 1B, and 4A. With reference to Figure 1A, valves 518, for example, valve 518c, includes hollow rivet 522 disposed in a hole extending partially through foam element 513 from one end thereof. Rivet 522 includes an indented or blank portion 522a extending radially therethrough at the inner end. The inner wall of rivet 522 is screw-threaded, and adjusting screw 524 is disposed therein. The position of screw 524 within rivet 522 can be adjusted by rotation of the screw. In the embodiment shown in Figure 1B, screw 524 has a slotted head for this purpose, and easily may be rotated by any flat edge element. In the embodiment shown in Figure 4A, screw 524' includes screw cap 524a' which extends exterior of the foam element, and preferably rests flat upon the side of the foam element when screw 524 is disposed fully within rivet 522. Cap 524a' allows for the position of screw 524' to be adjusted by rotation thereof by manual manipulation without the use of a flat-edge object. Screws 524 preferably are made of light weight plastic.

Interconnecting tubes 514 are disposed within indented portion 522a. The fluid communication may be controlled by adjusting the extent to which screws 524 extend within region 522b. When screws 524 are disposed out of contact with tubes 514, the fluid flows substantially freely between reservoirs 516 and/or support chambers 512. When screws 524 are in the innermost position, they fully contact and pinch-off tubes 514, preventing fluid flow substantially completely.

As discussed, reservoirs 516a-d are disposed within cylindrical holes 520a-d formed in foam element 513. The interior of holes 520 are screw-threaded and form containing chambers for reservoirs 516. With reference to Figure 2, flat screws 526 are disposed in respective holes 520a-d. Downward rotation of screws 526 brings the screws into contact with and compresses reservoir chambers 516. Accordingly, each reservoir 516 can be adjusted to and maintained at a desired volume by simple rotation of the corresponding flat screw 526 which causes the reservoir to collapse. When reservoirs 516 are at their maximum volume, the top of screws 526 are level with the top of holes 520. Screws 526 are made of a light-weight material such as plastic, and may include slots 526a to allow for rotation by a flat-head instrument. However, due to the light-weight nature of both screws 526 chambers 518 and foam element 513, only a minimal downward force is needed to collapse reservoirs 516 and retain reservoirs 516 at the desired volume. Thus, only a minimal torque will be needed to rotate screws 526 to the desired level. Thus, it is foreseen that adequate rotation could be provided by a common item such as a dime, paper clip or even the tip of the wearer's finger. If a sock liner is provided, corresponding holes could be provided therethrough as well to provide case of access. With further reference to Figure 3, holes 520' can be formed through outsole 530 to allow access to hole 520 from below, and thus to allow reservoirs 516 to be collapsed from below as well. Holes 530 are screw-threaded, and screws 526 are disposed therein.

By making use of reservoirs 516a-d and tubes 514, the degree of pressurization and thus the stiffness of each support chamber 512a-d can be adjusted to provide customized cushioning at different locations of the shoe, without requiring gas to be added to or leaked from the bladder. For example, if it is desired to increase the resistance to compression in the medial rear portion of the shoe, the pressure in one or both of support chambers 512b and 512c may be increased in the following manner. Screw 524 of valve 518a would be rotated into contact with connecting tube 514a, fully compressing the tube and preventing the flow of gas therethrough so as to isolate medial front reservoir 516a from support chamber 512a. Reservoir 516a would be collapsed by rotation of the corresponding flat screw 526, forcing gas therefrom and into reservoir 516c and medial support chambers 512b and 512c. Thereafter, reservoir 516c also would be collapsed forcing gas therefrom and into medial support chambers 512b and 512c. Screw 524 of pinch-off valve 518e would be rotated so as to compress the connecting tube, isolating reservoirs 516a and 516c from support chambers 512b and 512c.

The mass of the gas in chambers 512b and 512c has been increased, and since chambers 512b and 512c are now isolated from the other support chambers of the bladder, their effective volume is reduced. Thus, the pressure in chambers 512b and 512c is increased. As a result, when chambers 512b and 512c are loaded, element 510 has an increased resistance to compression and is stiffer at the location of support chambers 512b and 512c. If desired, the resistance to compression of chambers 512b and 512c can be further increased by closing tube 514c, making the chambers independent of each other and decreasing their effective volumes further. Thus, when a load is localized at one or the other of chambers 512b or 512c, the stiffness of the loaded chamber is increased since gas flow to the other chamber is prevented. For most people, during walking or running the foot rolls forwardly from the heel. Thus, chamber 512c experiences maximum loading separately from chamber 512b. As the foot rolls forwardly, the stiffness of each chamber is increased as it receives the maximum load beyond the maximum stiffness when the chambers are in communication. Accordingly, the overall stiffness experienced by the wearer is increased.

The pressure in both of chambers 512b and 512c could be further increased by reopening interconnecting tube 514a and rotating flat screws 526 into their uppermost position to allow additional gas to flow from support chamber 512a into collapsible reservoirs 516a and 516c. The process described above is then repeated to force the gas from reservoirs 516a and 516c into chambers 512b and 512c to further increase their stiffness. This process can be completed until any desired stiffness is obtained. In a similar manner, the effective volumes of chambers 512a and/or 512d can be adjusted by performing similar manipulations on reservoirs 516b and 516d. In fact, by making use of all four reservoirs 516, gas may be transferred from any one of chambers 512 to any of the other chambers to increase or decrease the stiffness of the bladder at a desired location, to thereby tune the overall cushioning characteristics of the midsole for a particular activity or for a specific gait characteristic of the wearer. For example, a wearer who tends to strike the ground at the midfoot or the forefoot may prefer that forefoot chamber 512a be more compliant. In this case, the fluid pressure could be transferred to the three rearward chambers. Similarly, a wearer who strikes the ground at the lateral rear may prefer that chamber 512d be less resistant and that forefoot chamber 512a be more resistant, in which case the fluid pressure could he transferred to chamber 512a from chamber 512d.

Furthermore, the overall pressure in chambers 512a-d and thus element 510 as a whole, can be reduced by pumping and storing gas into reservoirs 516a-d. For example, connectors 514a, 514b, 514e and 514f could be closed to isolate reservoirs 516a-d from support chambers 512a-d. Reservoirs 516a-c could be compressed to force fluid into reservoir 516d. Thereafter, connector 514d could be closed to isolate reservoir 516d. Reopening connectors 514a, 514b and 514e and allowing reservoirs 516a-c to expand by rotating flat screws 526 into their uppermost positions would lower the pressure in support chambers 512a-c. The process could then be repeated for reservoir 516c to further lower the overall pressure in bladder 510.

Although as shown in Figure 1, cushioning element 510 includes two separate bladder elements, that is, chamber 512a is formed as a separate element from chambers 512c-d, cushioning element 510 could be a single integral element in which chamber 512a could extend rearwardly to the forward boundary of chambers 512b and 512d, with foam element 513 eliminated. However, the portion of chamber 512a which would be disposed in the arch area of the shoe would be thinner than the remainder of chamber 512a, so as to allow pinch-off valves 518 to be disposed either above or below chamber 512a, and would include cylindrical holes formed therethrough for placement of reservoir chambers 516. Separate wall elements having internal threading could be disposed in the holes to allow for the use of flat screws 526. In this construction, chamber 512a would still be isolated by an internal wall from fluid communication with chambers 512b and 512d. Of course, bladder 510 could be formed as a single element, including reservoirs 516.

The present invention provides for an infinite number of variations of pressure and thus stiffness at various locations in the midsole, without requiring that gas be supplied to or released from the bladder. That is, the variations in pressure are achieved in a closed system. Thus, the attendant drawbacks of open air systems such as leakage or the requirement for an external pump are avoided. It is preferred that reservoir chambers 516 be placed in the arch or midfoot area as shown. This area receives relatively low loads and a closed reservoir in this location which would yield limited cushioning would not pose a problem, especially where foam element 513 is used. However, it is possible to locate the reservoirs at any convenient location, even outside of the midsole such as on the upper. Although one particular configuration of the various support chambers and reservoirs is shown, other configurations could be used. For example, chamber 512a or 512d could be broken into several smaller chambers linked in fluid communication by interconnecting tubes.

With reference to Figures 4, 4a and 4b, an alternative embodiment of the invention disclosed in Figures 9-11 is shown. Cushioning unit 600 includes heel support cushion 602 and collapsible reservoir chamber 604, linked in fluid communication by interconnecting tube 606a. Pinch-off valve 608a is disposed to control the opening and closing of tube 606a. Heel cushion 602 includes main chamber 602a, and medial post chamber 602b linked thereto by interconnecting tube 606b. Pinch-off valve 608b is disposed to control the opening and closing of interconnecting tube 606b. Reservoir chamber 604 has a bellows shape and may be collapsed to vary the contained volume thereof. Although not shown, the volume of reservoir chamber 604 could be adjusted and fixed in the same manner as reservoirs 516 in Figures 1-3, that is, by the use of flat screws.

When reservoir chamber 604 and heel cushion 602 are in full communication, that is, when interconnecting tube 606a is fully opened, the overall effective volume of the unit is the sum of the volumes of both chamber 604 and heel cushion 602. By compression of reservoir chamber 604, the gas contained in reservoir 604 is pumped into heel cushion 602. If tube 606a is closed, the overall effective volume of the unit is decreased to that of heel cushion 602. Thus, the resistance to compression of heel cushion 602 is increased, providing more stiffness at the heel of the shoe. In a preferred embodiment, the volume of chamber 604 when fully expanded is half of the volume of heel cushion 602. Thus, if chamber 604 is compressed fully, the effective pressure of heel cushion 602 is increased 1.5 times. For example, if the starting overall pressure of unit 600 and thus, of heel cushion 602 is 20psi, the pressure in heel cushion 602 would be increased to 30 psi by fully compressing chamber 604. Additionally, since the overall volume of unit 600 is decreased by one third when chamber 604 is compressed fully, the combined effect is to further stiffen heel cushion 602. Of course, the pressure in heel cushion 602 can be increased to a lesser extent by only partially compressing chamber 604. The pressure in heel cushion 602 can be increased further if interconnecting tube 606b is closed before compression of chamber 604 so that none of the gas in chamber 604 flows into post chamber 602b.

If desired, the pressure in medial post chamber 602b can be increased beyond that of main chamber 602a of heel cushion 602 by collapsing chamber 604, and then isolating post chamber 602b from main chamber 602a by closing tube 606b. If tube 606a is not closed, then the overall effective volume of main chamber 602a, which remains in communication with reservoir chamber 604 will only be reduced by the volume of post chamber 602b. Further, the mass of fluid contained in post chamber 602b will be increased. Since the volume of chamber 602b is significantly smaller than that of chamber 602a, the pressure in chamber 602a will be reduced slightly, while the pressure in chamber 602b will be increased greatly. Thus, heel cushion 602 will be stiffer at chamber 602b than at the remaining portion thereof.

In the embodiments of Figures 1-4, it is preferred that the units be manufactured by vacuum-forming or blowmolding. Radio frequency welding of sheet film to form the bladder would also work. The preferred film is polyester polyurethane manufactured by Tetra Plastics. The preferred inflatant fluid is sulfurhexafloride gas SF₆; however, any gas or combination of gases will work.

## Claims

1. A cushioning element for use in a shoe, said cushioning element (510;600) comprising:
a fluid-filled support chamber (512a;602a) and a variable volume fluid reservoir chamber (516a;604), said reservoir chamber (516a;604) being collapsible to reduce the volume thereof, and being linked in fluid communication with said support chamber (512a:602a), characterised in that both said fluid-filled support chamber (512a;602a) and said reservoir chamber (516a;604) are closed to the external environment; and in that collapsing means (526) is provided for collapsing said reservoir chamber (516a;604) a desired amount so as to cause said reservoir chamber (516a;604) to have a desired volume and for maintaining the desired volume.

2. The cushioning element recited in claim 1 characterised in that said reservoir chamber (516a;604) is controllably linked in fluid communication with said support chamber (512a:602a) so as to be selectively in full communication with or isolated from said support chamber (512a;602a).

3. The cushioning element recited in claim 1 characterised in that a connecting element (514a;606a) is provided linking said support chamber (512a;602a) and said reservoir chamber (516a;604) in fluid communication, and a control element (518a;608a) is disposed to control the opening and closing of said connecting element (514a;606a) to allow said chambers (512a,516a;602a,604) to be controllably linked.

4. The cushioning element recited in claim 3 characterised in that said connecting element (514a) comprises a resiliently collapsible tube, said control element (518a,606a) comprising a screw (524;524') disposed adjacent said collapsible tube, wherein, the position of said screw (524;524') relative to said tube is adjustable such that said screw (524;524') may be moved into contact with said tube to adjustably collapse said tube and thereby control the fluid communication of said reservoir chamber (516a;604) and said support chamber (514a;602a).

5. The cushioning element recited in claim 1 characterised in that said means for collapsing and maintaining comprises a screw-threaded chamber (520a) in which said reservoir chamber (516a) is disposed, and a screw element (526) disposed and vertically moveable within said screw-threaded chamber (520a).

6. The cushioning element recited in claim 1 characterised in that there are provided a forward and a rearward reservoir chamber (516a,516c) said forward reservoir chamber (516a) controllably linked in fluid communication with said rearward reservoir chamber (516c) so as to be selectively in full communication with or isolated from said rearward chamber (516c), a forward support chamber (512a) disposed forward of said forward reservoir chamber (516a), said forward support chamber (512a) being controllably linked in fluid communication with said forward reservoir chamber (516a) so as to be selectively in full communication with or isolated from said forward reservoir chamber (516a), and a rearward support chamber (512b) disposed rearwardly of said rearward reservoir chamber, (516c), said rearward support chamber (512b) being controllably linked in fluid communication with said rearward reservoir chamber (516c) so as to be selectively in full communication with or isolated from said rearward reservoir chamber (516c).

7. The cushioning element recited in claim 3, characterised in that said control element (518a;608a) comprises a valve.

8. The cushioning element recited in claim 7, characterised in that said valve comprises a pinch-off valve.

9. A shoe comprising a sole having the cushioning element recited in claim 1 characterised in that said support chamber (512a;602a) and said reservoir chamber (516a;604) form part of the sole.

10. The shoe recited in claim 9 characterised in that the sole further comprises foam (513) disposed about said support chamber (512a) and said reservoir chamber (516a).

11. The shoe recited in claim 9 characterised in that said reservoir chamber (516a) has a bellows shape.

12. The cushioning element recited in claim 1, said fluid-filled chamber being disposed, in use, in a heel portion of the shoe and said reservoir being disposed, in use, forwardly of said fluid-filled chamber.

13. The cushioning element recited in claim 1, said reservoir chamber (516a;604) having a bellows shape.

14. The cushioning element recited in claim 1 characterised in that there are provided, in use, two said reservoir chambers (516a;516b) disposed in an arch area of the shoe and three said support chambers, a first said support chamber (512a) disposed in the forepart of the shoe, a second said support chamber (512d) disposed in the lateral rear of the shoe and the third said support chamber (512b) disposed in the medial rear of the shoe, one said reservoir chamber (516b) linked in fluid communication by connectors (514b,514d,514f) with both said first and said second support chambers (512a, 512b) the other said reservoir chamber (516a) linked in fluid communication by connectors (514a, 514c, 514e) with both said first and said third support chambers (512a, 512b).

15. The cushioning element recited in claim 1 characterised in that there are provided, in use, four said reservoir chambers, said reservoir chambers disposed in the arch area of the shoe, said four reservoir chambers including a first medial forward reservoir chamber (516a), a second medial rearward reservoir chamber (516c), a third lateral forward reservoir chamber (516b) and a fourth lateral rearward reservoir chamber (516d), four said support chambers, a first said support chamber (512a) disposed in the forepart of the shoe, a second said support chamber (512d) disposed in the lateral rear of the shoe, and a third and fourth said support chamber (512b,512c) both disposed in the medial rear of the shoe, said fourth support chamber (512c) disposed rearwardly of said third support chamber (512b), wherein, said first reservoir chamber (516a) is linked in fluid communication by connectors (514a,514c) with both said first support chamber (512a) and said second reservoir chamber (516c), said second reservoir chamber (516c is linked in fluid communication by connectors (514c,514e) with both said first reservoir chamber (516a) and said third support chamber (512b), said third reservoir chamber (516b) is linked in fluid communication by connectors (514b,514d) with both said first support chamber (512a) and said fourth reservoir chamber (516d), and said fourth reservoir chamber (516d) is linked in fluid communication by connectors (514f,514d) with both said third reservoir chamber (516b) and said second support chamber (512d).

16. The cushioning element recited in claim 1 characterised in that said fluid-filled support chamber (512a) comprises a gas-filled support chamber, wherein, both said support chamber (512a) and said reservoir chamber (516a) share the same mass of gas.

17. A method of increasing the resistance of first and second fluid filled chambers (512a,516a) in a shoe bladder closed to the environment characterised by the steps of increasing the mass of fluid contained in the first chamber (512a) by reducing the volume of the second chamber (516a) and thereby forcing fluid into the first chamber (512a) from the second chamber (516a) and simultaneously reducing the effective volume of the first chamber (516a); and maintaining the reduced effective volume and increased mass at a desired level by maintaining the reduce volume of the second chamber (516a).

## Patentansprüche

1. Polsterelement zur Verwendung in einem Schuh, wobei das Polsterelement (510; 600)
eine fluidgefüllte Stützkammer (512a; 602a) und eine im Volumen variable Fluidreservoirkammer (516a; 604) umfaßt, wobei die Reservoirkammer (516a; 604) kollabierbar ist, um ihr Volumen zu reduzieren und in Fluidverbindung mit der Stützkammer (512a; 602a) steht, dadurch gekennzeichnet, daß sowohl die fluidgefüllte Stützkammer (512a; 602a) als auch die Reservoirkammer (516a; 604) von der äußeren Umgebung abgeschlossen sind, und daß ein Kollabiermittel (526) vorliegt, um die Reservoirkammer (516a; 604) in einem gewünschten Maße zusammenfallen zu lassen, um ein gewünschtes Volumen der Reservoirkammer zu bewirken und das gewünschte Volumen aufrechtzuerhalten.

2. Polsterelement gemäß Anspruch 1, dadurch gekennzeichnet, daß die Reservoirkammer (516a; 604) regulierbar in Fluidverbindung mit der Stützkammer (512a; 602a) steht, so daß sie wahlweise mit der Stützkammer (512a; 602a) völlig verbunden oder von dieser isoliert ist.

3. Polsterelement gemäß Anspruch 1, dadurch gekennzeichnet, daß ein Verbindungselement (514a; 606a) vorliegt, welches die Stützkammer (512a; 602a) und die Reservoirkammer (516a; 604) in Fluidverbindung bringt, und ein Regulierelement (518a; 608a) angeordnet ist, um das Öffnen und Schließen des Verbindungselements (514a; 606a) zu regulieren, um eine regulierbare Verbindung dieser Kammern (512a, 516a, 602a, 604) zu erlauben.

4. Polsterelement gemäß Anspruch 3, dadurch gekennzeichnet, daß das Verbindungselement (514a) einen elastisch kollabierbaren Schlauch umfaßt, wobei das Regulierelement (518a, 606a) eine Schraube (524; 524') umfaßt, die angrenzend an den kollabierbaren Schlauch angeordnet ist, wobei die Position der Schraube (524; 524') in Bezug auf den Schlauch derart einstellbar ist, daß die Schraube (524; 524') in Kontakt mit dem Schlauch gebracht werden kann, um einstellbar das Zusammenfallen des Schlauchs zu bewirken und dadurch die Fluidverbindung dar Reservoirkammer (516a; 604) und der Stützkammer (514a; 602a) zu regulieren.

5. Polsterelement gemäß Anspruch 1, dadurch gekennzeichnet, daß das Mittel zum Kollabieren und Aufrechterhalten eine mit einem Schraubengewinde versehene Kammer (520a), in der die Reservoirkammer (516a) angeordnet ist, und ein Schraubenelement (526), welches innerhalb der mit dem Schraubengewinde versehenen Kammer (520a) angeordnet und vertikal bewegbar ist, umfaßt.

6. Polsterelement gemäß Anspruch 1, dadurch gekennzeichnet, daß eine vordere und eine hintere Reservoirkammer (516a, 516c) vorliegen, wobei die vordere Reservoirkammer (516a) regulierbar mit der hinteren Reservoirkammer (516c) in Fluidverbindung steht, so daß sie wahlweise mit der hinteren Kammer (516c) völlig verbunden oder von dieser isoliert ist, eine vordere Stützkammer (512a) vor der vorderen Reservoirkammer (516a) angeordnet ist, wobei die vordere Stützkammer (516a) regulierbar mit der vorderen Reservoirkammer (516a) in Fluidverbindung steht, so daß sie wahlweise mit der vorderen Reservoirkammer (516a) völlig verbunden oder von dieser isoliert ist, und eine hintere Stützkammer (512b) vorliegt, welche hinter der hinteren Reservoirkammer (516c) angeordnet ist, wobei die hintere Stützkammer (512b) regulierbar mit der hinteren Reservoirkammer (516c) in Fluidverbindung steht, so daß sie wahlweise mit der hinteren Reservoirkammer (516c) völlig verbunden oder von dieser isoliert ist.

7. Polsterelement gemäß Anspruch 3, dadurch gekennzeichnet, daß das Regulierelement (518a; 608a) ein Ventil umfaßt.

8. Polsterelement gemäß Anspruch 7, dadurch gekennzeichnet, daß das Ventil ein Pinch-Off-Ventil umfaßt.

9. Schuh mit einer Sohle, welche das Polsterelement gemäß Anspruch 1 aufweist, dadurch gekennzeichnet, daß die Stützkammer (512a; 602a) und die Reservoirkammer (516a; 604) einen Teil der Sohle bilden.

10. Schuh gemäß Anspruch 9, dadurch gekennzeichnet, daß die Sohle außerdem Schaum (513) enthält, der um die Stützkammer (512a) und die Reservoirkammer (516a) herum angeordnet ist.

11. Schuh gemäß Anspruch 9, dadurch gekennzeichnet, daß die Reservoirkammer (516a) Blasebalgform aufweist.

12. Polsterelement gemäß Anspruch 1, wobei die fluidgefüllte Kammer, im Gebrauch, in, Absatzbereich des Schuhs und das Reservoir, im Gebrauch, vor der fluidgefüllten Kammer angeordnet sind.

13. Polsterelement gemäß Anspruch 1, wobei die Reservoirkammer (516a; 604) Blasebalgform aufweist.

14. Polsterelement gemäß Anspruch 1, dadurch gekennzeichnet, daß, im Gebrauch, zwei Reservoirkammern (516a; 516b), die im Mittelfußbereich des Schuhs angeordnet sind, und drei Stützkammern vorliegen, wobei eine erste Stützkammer (512a) im vorderen Teil des Schuhs, eine zweite Stützkammer (512d) im seitlichen hinteren Bereich des Schuhs und die dritte Stützkammer (512b) im mittleren hinteren Bereich des Schuhs angeordnet sind, wobei eine der Reservoirkammern (516b) durch Verbindungsstücke (514b, 514d, 514f) sowohl mit der ersten als auch mit der zweiten Stützkammer (512a, 512b) in Fluidverbindung steht, und wobei die andere Reservoirkammer (516a) durch Verbindungsstücke (514a, 514c, 514e) sowohl mit der ersten als auch mit der dritten Stützkammer (512a, 512b) in Fluidverbindung steht.

15. Polsterelement gemäß Anspruch 1, dadurch gekennzeichnet, daß, im Gebrauch, vier Reservoirkammern vorliegen die in dem Mittelfußbereich des Schuhs angeordnet sind, wobei die vier Reservoirkammern eine erste mittlere vordere Reservoirkammer (516a), eine zweite mittlere hintere Reservoirkammer (516c), eine dritte seitliche vordere Reservoirkammer (516b) und eine vierte seitliche hintere Reservoirkammer (516d) umfassen, vier Stützkammern vorliegen, wobei eine erste Stützkammer (512a) im vorderen Teil des Schuhs, eine zweite Stützkammer (512d) im seitlichen hinteren Bereich des Schuhs und eine dritte und vierte Stützkammer (512b, 512c) jeweils im mittleren hinteren Bereich des Schuhs angeordnet sind, wobei die vierte Stützkammer (512c) hinter der dritten Stützkammer (512b) angeordnet ist, wobei die erste Reservoirkammer (516a) durch Verbindungsstücke (514a, 514c) sowohl mit der ersten Stützkammer (512a) als auch mit der zweiten Reservoirkammer (516c) in Fluidverbindung steht , wobei die zweite Reservoirkammer (516c) durch Verbindungsstücke (514c, 514e) sowohl mit der ersten Reservoirkammer (516a) als auch mit der dritten Stützkammer (512b) in Fluidverbindung steht, wobei die dritte Reservoirkammer (516b) durch Verbindungsstücke (514b, 514d) sowohl mit der ersten Stützkammer (512a) als auch mit der vierten Reservoirkammer (516d) in Fluidverbindung steht, und wobei die vierte Reservoirkammer (516d) durch Verbindungsstücke (514f, 514d) sowohl mit der dritten Reservoirkammer (516b) als auch mit der zweiten Stützkammer (512d) in Fluidverbindung steht.

16. Polsterelement gemäß Anspruch 1 dadurch gekennzeichnet, daß die fluidgefüllte Stützkammer (512a) eine gasgefüllte Stützkammer umfaßt, wobei sowohl die Stützkammer (512a) als auch die Reservoirkammer (516a) die gleiche Masse an Gas aufweisen.

17. Verfahren zum Erhöhen der Widerstandsfähigkeit von ersten und zweiten fluidgefüllten Kammern (512a, 516a) in einem von der Umgebung abgeschlossenen Schuhhohlraum, gekennzeichnet durch die Stufen: Erhöhen der in der ersten Kammer (512a) enthaltenen Fluidmasse durch Reduzieren des Volumens der zweiten Kammer (516a), wodurch Fluid von der zweiten Kammer (516a) in die erste Kammer (512a) gedrückt wird, und gleichzeitiges Reduzieren des effektiven Volumens der ersten Kammer (516a); und Aufrechterhalten des reduzierten effektiven Volumens und der erhöhten Masse bei einem gewünschten Niveau durch Aufrechterhalten des reduzierten Volumens der Zweiten Kammer (516a).

## Revendications

1. Elément de coussin amortisseur (510; 600) destiné à être utilisé dans une chaussure,
comprenant :
une chambre de support remplie de fluide (512a ; 602a) et
une chambre réservoir de fluide (516a, 604) de volume variable, cette chambre réservoir (516a ; 604) étant aplatissable pour réduire son volume, et se trouvant mise en communication de fluide avec la chambre de support (512a ; 602a),
caractérisé en ce que
- la chambre de support remplie de fluide (512a ; 602a) et la chambre réservoir (516a ; 604) sont toutes deux fermées par rapport à l'environnement extérieur ; et
- un moyen d'aplatissement (526) est utilisé pour aplatir la chambre réservoir (516a ; 604) d'une quantité voulue, de manière à donner un volume voulu à cette chambre réservoir (516a ; 604), et à maintenir ce volume voulu.

2. Elément de coussin amortisseur selon la revendication 1,
caractérisé en ce que
la chambre réservoir (516a ; 604) est mise en communication de fluide de façon contrôlable avec la chambre de support (512a ; 602a) de manière à se trouver sélectivement en pleine communication avec la chambre de support (512a ; 602a) ou à être isolée de celle-ci.

3. Elément de coussin amortisseur selon la revendication 1,
caractérisé en ce qu'
un élément de connexion (514a ; 606a) est utilisé pour mettre la chambre de support (512a ; 602a) et la chambre réservoir (516a ; 604) en communication de fluide, et un élément de commande (518a ; 608a) est monté pour commander l'ouverture et la fermeture de l'élément de connexion (514a ; 606a) afin de permettre aux chambres (512a, 516a ; 602a, 604) d'être reliées de façon contrôlable.

4. Elément de coussin amortisseur selon la revendication 3,
caractérisé en ce que
- l'élément de connexion (514a) comprend un tube aplatissable élastiquement, l'élément de commande (518a, 606a) comprenant une vis (524 ; 524') disposée au voisinage du tube aplatissable, et
- la position de la vis (524 ; 524') par rapport au tube est réglable de façon que cette vis (524 ; 524') peut être amenée en contact avec le tube pour aplatir ce tube de manière réglable et commander ainsi la communication de fluide de la chambre réservoir (516a ; 604) avec la chambre de support (514a ; 602a).

5. Elément de coussin amortisseur selon la revendication 1,
caractérisé en ce que
- le moyen d'aplatissement et de maintien comprend une chambre taraudée (520a) dans laquelle est disposée la chambre réservoir (516a), et
- un élément de vis (526) est vissé et peut se déplacer verticalement dans la chambre taraudée (520a).

6. Elément de coussin amortisseur selon la revendication 1,
caractérisé en ce qu'
- on utilise une chambre réservoir avant et une chambre réservoir arrière (516a, 516c), la chambre réservoir avant (516a) étant mise en communication de fluide de façon contrôlable avec la chambre réservoir arrière (516c) de manière à se trouver sélectivement en pleine communication avec la chambre arrière (516c) ou à être isolée de celle-ci,
- une chambre de support avant (512a) disposée en avant de la chambre réservoir avant (516a), cette chambre de support avant (512a) étant mise en communication de fluide de façon contrôlable avec la chambre réservoir avant (516a) de manière à se trouver mise sélectivement en pleine communication avec la chambre réservoir avant (516a) ou à être isolée de celle-ci, et
- une chambre de support arrière (512b) disposée en arrière de la chambre réservoir arrière (516c), cette chambre de support arrière (512b) étant mise en communication de fluide de façon contrôlable avec la chambre réservoir arrière (516c) de manière à se trouver sélectivement en pleine communication avec la chambre réservoir arrière (516c) ou à être isolée de celle-ci.

7. Elément de coussin amortisseur selon la revendication 3,
caractérisé en ce que
l'élément de commande (518a ; 608a) comprend une soupape.

8. Elément de coussin amortisseur selon la revendication 7,
caractérisé en ce que
la soupape comprend une soupape de fermeture par pincement.

9. Chaussure comprenant une semelle munie de l'élément de coussin amortisseur selon la revendication 1,
caractérisée en ce que
la chambre de support (512a ; 602a) et la chambre réservoir (516a ; 604) font partie de la semelle.

10. Chaussure selon la revendication 9,
caractérisée en ce que
la semelle comprend en outre de la mousse (513) disposée autour de la chambre de support (512a) et de la chambre réservoir (516a).

11. Chaussure selon la revendication 9,
caractérisée en ce que
la chambre réservoir (516a) a une forme de soufflet.

12. Elément de coussin amortisseur selon la revendication 1,
caractérisé en ce que
la chambre remplie de fluide est disposée, en cours d'utilisation, dans la partie de talon de la chaussure, et le réservoir est disposé, en cours d'utilisation, vers l'avant de la chambre remplie de fluide.

13. Elément de coussin amortisseur selon la revendication 1,
caractérisé en ce que
la chambre réservoir (516a ; 604) a une forme de soufflet.

14. Elément de coussin amortisseur selon la revendication 1,
caractérisé en ce qu'
on prévoit, en cours d'utilisation, deux des chambres réservoirs (516a ; 516b) disposées dans la zone de voûte plantaire de la chaussure, et trois des chambres de support, une première chambre de support (512a) étant disposée dans la partie avant de la chaussure, une seconde chambre de support (512d) étant disposée dans la zone latérale arrière de la chaussure et la troisième chambre de support (512b) étant disposée dans la zone moyenne arrière de la chaussure, une chambre réservoir (516b) étant mise en communication de fluide, par des connecteurs (514b, 514d, 514f) à la fois avec la première chambre de support et la seconde chambre de support (512a, 512b) tandis que l'autre chambre réservoir (516a) est mise en communication de fluide, par des connecteurs (514a, 514c, 514e) à la fois avec la première chambre de support et la troisième chambre de support (512a, 512b).

15. Elément de coussin amortisseur selon la revendication 1,
caractérisé en ce qu'
on prévoit, en cours d'utilisation, quatre des chambres réservoirs disposées dans la zone de voûte plantaire de la chaussure, les quatre chambres réservoirs comprenant une première chambre réservoir intermédiaire avant (516a), une seconde chambre réservoir intermédiaire arrière (516c), une troisième chambre réservoir latérale avant (516b) et une quatrième chambre réservoir latérale arrière (516d), quatre des chambres de support, une première chambre de support (512a) disposée dans la partie avant de la chaussure, une seconde chambre de support (512d) disposée dans la zone latérale arrière de la chaussure, ainsi qu'une troisième chambre de support et une quatrième chambre de support (512b, 512c) toutes deux disposées dans la zone intermédiaire arrière de la chaussure, la quatrième chambre de support (512c) étant disposée vers l'arrière de la troisième chambre de support (512b), de façon que la première chambre réservoir (516a) est mise en communication de fluide, par des connecteurs (514a, 514c), à la fois avec la première chambre de support (512a) et la seconde chambre réservoir (516c), la seconde chambre réservoir (516c) est mise en communication de fluide, par des connecteurs (514c, 514e) à la fois avec la première chambre réservoir (516a) et la troisième chambre de support (512b), la troisième chambre réservoir (516b) est mise en communication de fluide, par des connecteurs (514b, 514d) à la fois avec la première chambre de support (512a) et la quatrième chambre réservoir (516d), et la quatrième chambre réservoir (516d) est mise en communication de fluide, par des connecteurs (414f, 514d) à la fois avec la troisième chambre réservoir (516b) et la seconde chambre de support (512d).

16. Elément de coussin amortisseur selon la revendication 1,
caractérisé en ce que
la chambre de support remplie de fluide (512a) comprend une chambre de support remplie de gaz, de façon que la chambre de support (512a) et la chambre réservoir (516a) partagent toutes deux la même masse de gaz.

17. Procédé pour augmenter la résistance d'une première chambre remplie de fluide et d'une seconde chambre remplie de fluide (512a, 516a) dans une vessie de chaussure fermée par rapport à l'environnement extérieur,
caractérisé par
les étapes consistant a :
- augmenter la masse du fluide contenu dans la première chambre (512a) en réduisant le volume de la seconde chambre (516a) pour forcer ainsi le fluide à passer de la seconde chambre (516a) dans la première chambre (512a), et en réduisant simultanément le volume effectif de la première chambre (516a) ; et
- maintenir le volume effectif réduit et la masse augmentée à un niveau voulu, en maintenant le volume réduit de la seconde chambre (516a).
